# EUROPEAN PATENT SPECIFICATION

(11) **EP 3 955 143 B1**
(45) Date of publication and mention of the grant of the patent: **11.03.2026**
(21) Application number: 19928299.7
(22) Date of filing: 26.06.2019
(51) Int. Cl.: G06F 21/31, G06Q 20/40, H04L 9/40, G06Q 20/12, G06F 21/62, G06N 3/092, G06N 3/0895, G06N 3/09, G06N 3/08, G06N 3/0499

(54) **FRAUD DEDUCTION SYSTEM, FRAUD DEDUCTION METHOD, AND PROGRAM**
BETRUGSABLEITUNGSSYSTEM, BETRUGSABLEITUNGSVERFAHREN UND PROGRAMM
SYSTÈME DE DÉDUCTION DE FRAUDE, PROCÉDÉ DE DÉDUCTION DE FRAUDE, ET PROGRAMME

(43) Date of publication of application: 16.02.2022
(73) Proprietor: Rakuten Group, Inc., Setagaya-ku Tokyo 158-0094 (JP)
(72) Inventor: TOMODA, Kyosuke, Setagaya-ku Tokyo 1580094 (JP)
(74) Representative: EIP
(86) International application number: PCT/JP2019/025366
(87) International publication number: WO 2020/261426

(56) References cited:
- EP-A1- 2 256 675
- JP-A- 2010 026 547
- JP-A- 2011 160 029
- JP-A- 2015 170 219
- JP-A- 2018 063 728
- US-A1- 2017 372 317
- US-A1- 2019 052 652

## Description

### Technical Field

The one embodiment of the present invention relates to a fraud estimation system, a fraud estimation method, and a program therefor.

### Background Art

Hitherto, technologies for estimating a user's fraudulence in services provided on the Internet or via other measures have been studied. In Patent Literature 1, for instance, there is described estimation of the credit quality of a user who wishes to newly sign up in a system configured to manage a blacklist of users who are considered to be fraudulent, by obtaining a website browsing history and other action histories of the user who wishes to newly sign up and comparing the obtained histories to action histories of the users on the blacklist. Patent Literature 2 relates to automated machine learning techniques that can be used to perform detection of fraud in real-time or near real-time. Patent Literature 3 relates to a method for determining the behavior of a malware host using a network flow analysis and machine learning.

### Citation List

### Patent Literature

[PTL 1] JP 2018-045573 A
[PTL 2] US 2017/372317 A1
[PTL 3] US 2019/052652 A1

### Summary of Invention

### Technical Issue

However, various tendencies are observed in activities of users who commit fraudulence and, consequently, the action histories of a user who wishes to newly sign up and who may commit fraudulence do not always resemble the action histories of the users on the blacklist. With the technology of Patent Literature 1, only users whose activities resemble those of the users on the blacklist are detectable, and the precision of fraud estimation cannot be raised to a satisfactorily high level.

The one embodiment of the present invention has been made in view of the issue described above, and an object of the one embodiment of the present invention is therefore to provide a fraud estimation system, a fraud estimation method, and a program, which enable estimation precision to be raised.

### Solution to Issue

In order to solve the above-mentioned issues, according to one embodiment of the present invention, there is provided a fraud estimation system including: storage means for storing a learning model that has learned a relationship between a comparison result that is a result of comparing user information of a user in one service to user information of a fraudulent user or an authentic user in another service and presence or absence of fraudulence in the one service; comparison result obtaining means for obtaining a comparison result that is a result of comparing user information of a target user in the one service and user information of a fraudulent user or an authentic user in the another service; output obtaining means for obtaining output from the learning model based on the comparison result; estimation means for estimating fraudulence of the target user based on the output from the learning model; and control means for, when the estimation means estimates that the target user is fraudulent, limiting the use of the one service by the target user.

According to at least one embodiment of the present invention, there is provided a computer-implemented fraud estimation method including: a comparison result obtaining step of obtaining a comparison result that is a result of comparing user information of a target user in one service and user information of a fraudulent user or an authentic user in another service; an output obtaining step of obtaining output from a learning model based on the comparison result, the learning model having learned a relationship between a comparison result that is a result of comparing user information of a user in the one service to user information of a fraudulent user or an authentic user in the another service and presence or absence of fraudulence in the one service; an estimation step of estimating fraudulence of the target user based on output from the learning model; and a control step of, when the estimation step estimates that the target user is fraudulent, limiting the use of the one service by the target user.

According to at least one embodiment of the present invention, there is provided a program for causing a computer to function as: comparison result obtaining means for obtaining a comparison result that is a result of comparing user information of a target user in one service and user information of a fraudulent user or an authentic user in another service; output obtaining means for obtaining output from a learning model based on the comparison result, the learning model having learned a relationship between a comparison result that is a result of comparing user information of a user in the one service to user information of a fraudulent user or an authentic user in the another service and presence or absence of fraudulence in the one service; estimation means for estimating fraudulence of the target user based on output from the learning model; and control means for, when the estimation means estimates that the target user is fraudulent, limiting the use of the one service by the target user.

According to one aspect of the present invention, the learning model has learned a relationship between a plurality of comparison results respectively corresponding to a plurality of other services and the presence or absence of fraudulence in the one service, the comparison result obtaining means is configured to obtain a plurality of comparison results respectively corresponding to the plurality of other services, and the output obtaining means is configured to obtain output from the learning model based on the plurality of comparison results.

According to one aspect of the present invention, the learning model has further learned a relationship between a utilization situation in the one service and the presence or absence of fraudulence in the one service, the fraud estimation system further includes utilization situation obtaining means for obtaining a utilization situation of the one service by the target user, and the output obtaining means is configured to obtain output from the learning model based on the utilization situation by the target user.

According to one aspect of the present invention, in the one service, fraudulence is estimated based on user information of a predetermined item, and the utilization situation is a utilization situation about the predetermined item.

According to one aspect of the present invention, in the one service and the another service each, a plurality of items of user information are registered, the learning model has learned relationships between a plurality of comparison results respectively corresponding to the plurality of items and the presence or absence of fraudulence in the one service, the comparison result obtaining means is configured to obtain a plurality of comparison results respectively corresponding to the plurality of items, and the output obtaining means is configured to obtain output from the learning model based on the plurality of comparison results.

According to one aspect of the present invention, in the another service, fraudulence is estimated based on user information of a predetermined item, the learning model has learned a relationship between a comparison result of user information of the predetermined item and the presence or absence of fraudulence in the one service, and the comparison result obtaining means is configured to obtain a comparison result of the predetermined item.

According to one aspect of the present invention, in the another service, fraudulence is estimated based on user information of a first item, the learning model has learned a relationship between a comparison result of user information of a second item and the presence or absence of fraudulence in the one service, and the comparison result obtaining means is configured to obtain a comparison result of the second item.

According to one aspect of the present invention, in the another service, user information of the target user in the one service and user information of a fraudulent user or an authentic user in the another service are compared, and the comparison result obtaining means is configured to obtain a result of the comparison from the another service.

According to one aspect of the present invention, the fraud estimation system further includes reception means for receiving a utilization request that is a request for use of the one service by the target user, and the estimation means is configured to estimate fraudulence of the target user when the one service is used by the target user.

### Advantageous Effects of Invention

According to the one embodiment of the present invention, estimation precision can be raised.

### Brief Description of Drawings

FIG. 1 is a diagram for illustrating an overall configuration of a fraud estimation system according to an embodiment of the present invention.
FIG. 2 is an explanatory diagram for outlining processing of the fraud estimation system.
FIG. 3 is a function block diagram for illustrating an example of functions implemented in the fraud estimation system.
FIG. 4 is a table for showing a data storage example of a user database of Service A.
FIG. 5 is a table for showing a data storage example of a blacklist of Service A.
FIG. 6 is a table for showing a data storage example of a user database of Service B.
FIG. 7 is a table for showing a data storage example of a blacklist of Service B.
FIG. 8 is a table for showing a data storage example of a user database of Service C.
FIG. 9 is a table for showing a data storage example of a blacklist of Service C.
FIG. 10 is a table for showing a data storage example of a utilization situation database.
FIG. 11 is a table for showing a data storage example of teacher data.
FIG. 12 is a flow chart for illustrating an example of processing executed in the fraud estimation system.
FIG. 13 is a flow chart for illustrating the example of the processing executed in the fraud estimation system.

### Description of Embodiments

### [1. Overall Configuration of Fraud Estimation System]

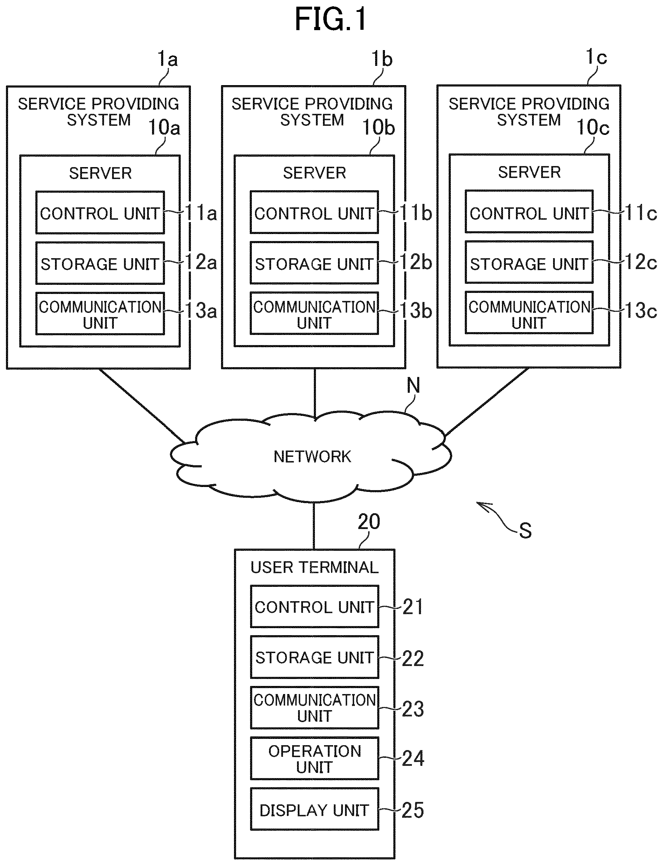

An example of a fraud estimation system according to an embodiment of the present invention is described below. FIG. 1 is a diagram for illustrating an overall configuration of a fraud estimation system according to this embodiment. As illustrated in FIG. 1, a fraud estimation system S includes service providing systems 1a to 1c and a user terminal 20, which can be connected to the Internet or a similar network N.

The service providing systems 1a to 1c are each a system for providing a service to users. Each of the service providing systems 1a to 1c can provide a service of any type and provides users with, for example, an electronic settlement service, a financial service, an electronic transaction service, an insurance service, a communication service, a home delivery service, or a video streaming service. In this embodiment, services provided by the service providing systems 1a to 1c are referred to as "Service A" to "Service C", respectively.

The service providing systems 1a to 1c include, for example, servers 10a to 10c, respectively. In the following description, the service providing systems 1a to 1c are simply referred to as "service providing systems 1" when it is not particularly required to distinguish the service providing systems 1a to 1c fromone another. Similarly, the servers 10a to 10c are simply referred to as "servers 10" when it is not particularly required to distinguish the servers 10a to 10c from one another. The same applies to control units 11a to 11c, storage units 12a to 12c, and communication units 13a to 13c illustrated in FIG. 1, and alphabets at the tail end of their reference symbols are omitted when it is not particularly required to distinguish one of the identical units from another.

The server 10 is a server computer. The server 10 includes a control unit 11, a storage unit 12, and a communication unit 13. The control unit 11 includes at least one processor. The control unit 11 executes processing in accordance with a program and data that are stored in the storage unit 12. The storage unit 12 includes a main memory and an auxiliary memory. For example, the main memory is a RAM or a similar volatile memory, and the auxiliary memory is a ROM, an EEPROM, a flash memory, a hard disk drive, or a similar non-volatile memory. The communication unit 13 is a communication interface for cable communication or wireless communication, and holds data communication over the network N.

The user terminal 20 is a computer to be operated by a user. For example, the user terminal 20 is a cellular phone (including a smart phone), a portable information terminal (including a tablet computer), or a personal computer. In this embodiment, the user terminal 20 includes a control unit 21, a storage unit 22, a communication unit 23, an operation unit 24, and a display unit 25. The control unit 21, the storage unit 22, and the communication unit 23 may have the same physical configurations as those of the control unit 11, the storage unit 12, and the communication unit 13, respectively.

The operation unit 24 is an input device, for example, apointing device, which is a touch panel, a mouse, or the like, a keyboard, or a button. The operation unit 24 transmits what operation has been performed by the user to the control unit 21. The display unit 25 is, for example, a liquid crystal display unit or an organic EL display unit. The display unit 25 displays an image following an instruction of the control unit 21.

Programs and data described as ones to be stored in the storage units 12 and 22 may be supplied via the network N. The hardware configurations of the computers described above are not limited to the examples given above, and may employ various types of hardware. For instance, the computers may include a reading unit (for example, an optical disc drive or a memory card slot) configured to read a computer-readable information storage medium, and an input/output unit (for example, a USB port) for data input/output to/from an external device. For example, a program or data stored in an information storage medium may be supplied to the computers via the reading unit or the input/output unit.

There may be any number of service providing systems 1, and the number of service providing systems 1 is not limited to three. For instance, there may be two service providing systems 1 or four or more service providing systems 1. To give another example, one service providing system 1 may provide a plurality of services. It is sufficient for each service providing system 1 to include at least one computer, and may include, for example, a plurality of servers 10 or a computer that is not a server computer. Although only one user terminal 20 is illustrated in FIG. 1, there may also be a plurality of user terminals 20.

### [1-2. Outline of Fraud Estimation System]

In this embodiment, the service providing systems 1 each manage a blacklist indicating fraudulent users.

A fraudulent user may mean a user who actually has committed fraudulence, or may mean a user who may possibly commit fraudulence in the future. For example, a user has taken an action that is in violation of the service's terms, a user who has committed an illegal act, or a user who has a possibility for those qualifies as a fraudulent user. A user who has, for example, committed unauthorized access, committed unauthorized use of a credit card, hijacked another person's account, hacked, cracked, posted a malicious post, intentionally flooded the service with access, or harassed another user also qualifies as a fraudulent user.

The blacklist is a list in which user information about fraudulent users is stored. In other words, the blacklist is data with which a fraudulent user can be identified. A fraudulent user on the blacklist is limited in the use of the service. For example, the cessation of the user ID (user account) itself or the disabling of some functions of the service qualifies as limiting the use of the service. When fraud is estimated, it is not required to immediately limit the use of the service: the use of the service may be limited after an administrator examines, or the use of the service may be limited after additional authentication is performed on the user.

The blacklist may be edited manually by an administrator of the service, or may be edited automatically through analysis performed by the service providing system 1 on a user's activity. Items of user information to be stored in the blacklist (hereinafter referred to as "blacklist items") may be common to all services. In this embodiment, blacklist items set down for a service are items adapted to the service.

Service A has, for example, two blacklist items: an IP address of the user terminal 20 and a device ID of the user terminal 20, and the IP address and device ID of a fraudulent user in Service A are stored in the blacklist of Service A. The service providing system 1a determines whether an IP address or device ID of a user who intends to use Service A is stored in the blacklist. The service providing system 1a limits the use of Service A by a user whose IP address or device ID is stored in the blacklist. The condition for limiting the use of Service A may be the storing of both of the IP address and the device ID in the blacklist, instead of the storing of any one of the IP address and the device ID in the blacklist.

Service B has, for example, two blacklist items: an address of a user and an IP address of the user terminal 20, and the address and device ID of a fraudulent user in Service B are stored in the blacklist of Service B. The service providing system 1b determines whether any one of the address and IP address of a user who intends to use Service B is stored in the blacklist. The service providing system 1b limits the use of Service B by a user whose address or IP address is stored in the blacklist. The condition for limiting the use of Service B may be the storing of both of the address and the IP address in the blacklist, instead of the storing of any one of the address and the IP address in the blacklist.

Service C has, for example, two blacklist items: the name of a user and a card number of the user's credit card, and the name and card number of a fraudulent user in Service C are stored in the blacklist of Service C. The service providing system 1c determines whether any one of the name and card number of a user who intends to use Service C is stored in the blacklist. The service providing system 1c limits the use of Service C by a user whose name or card number is stored in the blacklist. The condition for limiting the use of Service C may be the storing of both of the name and the card number in the blacklist, instead of the storing of any one of the name and the card number in the blacklist.

As described above, each service providing system 1 limits the use of the service by a fraudulent user who is on the own system' s blacklist. However, there are users who are not on the blacklist of the service providing system 1 but commit fraudulence, and the utilization of its own blacklist alone is therefore not always enough to prevent fraudulence of such users.

For instance, a fraudulent user in Service C cannot be prevented from committing fraudulence with the use of a card number different from a card number stored in the blacklist because the different card number is not on the blacklist of Service C. In this regard, the fraudulent user may have committed fraudulence in the other services, Service A and Service B, and may have registered, to the other services A and B, user information of another item (for example, an address) registered to Service C. Fraudulence can therefore be prevented when there is a way to detect that user information of a user using Service C matches user information of a fraudulent user in the other services A and B.

The fraud estimation system S accordingly estimates whether a user of one service providing system 1 is a fraudulent user with the use of the blacklist of another service providing system 1. In this embodiment, processing of the fraud estimation system S is described by taking as an example a case in which fraudulence of a user who uses Service C is estimated with the use of the blacklists of Service A and Service B.

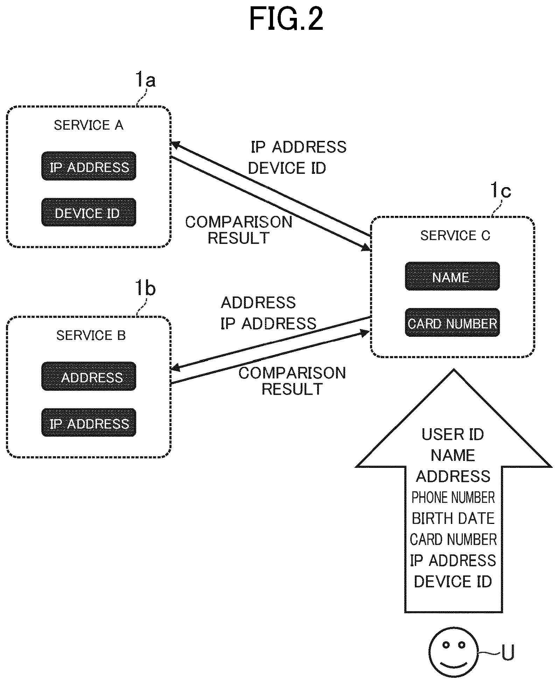

FIG. 2 is an explanatory diagram for outlining the processing of the fraud estimation system S. Items hatched in FIG. 2 are blacklist items. As described above, the blacklist items of Service A are the IP address and the device ID, the blacklist items of Service B are the address and the IP address, and the blacklist items of Service C are the name and the card number.

As illustrated in FIG. 2, a user U who uses Service C registers, in advance, user information having a plurality of items, for example, a user ID, a name, an address, a phone number, a birth date, a card number, and an IP address and device ID of the user terminal 20. Although a case in which the user U inputs his/her user ID himself/herself at the time of user registration is described in this embodiment, the user ID may automatically be assigned by the service providing system 1c. User registration may not be mandatory, and a name, an address, and other types of user information may be input on the spot at the time of use of Service C.

When the user U intends to use Service C, the service providing system 1c requests the service providing system 1a to perform comparison to the IP address and device ID (the blacklist items of Service A) of the user U. Similarly, the service providing system 1c requests the service providing system 1b to perform comparison to the address and IP address (the blacklist items of Service B) of the user U. That is, the service providing system 1c requests the service providing systems 1a and 1b to determine whether the user U who intends to use Service C is the same person as a fraudulent user in Service A or Service B.

The service providing system 1a refers to IP addresses and device IDs of fraudulent users on its own blacklist for comparison to the IP address and device ID received from the service providing system 1c. Similarly, the service providing system 1b refers to addresses and IP addresses of fraudulent users on its own blacklist for comparison to the address and IP address received from the service providing system 1c.

The service providing systems 1a and 1b each transmit the result of the comparison (whether the IP address or another type of user information is a match) to the service providing system 1c. When the user information of the user U does not match the user information of any of fraudulent users in Service A and Service B, the probability that the user U is not a fraudulent user in Service A and Service B is high. When the user information of the user U matches the user information of a fraudulent user in Service A or Service B, on the other hand, the probability that the user U is the same person as the fraudulent user in Service A or Service B is high.

In this regard, the user U whose probability to be the same person as a fraudulent user in Service A or Service B is high does not always commit fraudulence. For instance, Service A to Service C each perform fraud detection from its unique standpoint, and a service that performs fraud detection from a standpoint greatly different from that of Service C may yield a comparison result that is not quite a true reflection. When comparison results from the service providing systems 1a and 1b are taken in as they are, the criterion for limiting the use of service may become so strict that a user who is not considered fraudulent in Service C may be limited in the use of the service.

To address this, the service providing system 1c estimates fraudulence of the user U with the use of a learning model that has learned the relationship between comparison results from Service A and Service B and the presence/absence of fraud in Service C. In this embodiment, the learning model has learned the relationship between utilization situation and the presence/absence of fraud in Service C as well in order to raise the precision of fraud estimation even higher.

The learning model is a learned model. A learning model is also called a learner, a classifier, or a classification learner in some cases. In this embodiment, a learning model for classifying whether the user U is a fraudulent user is used. Various known methods are employable for the machine learning itself, and examples of the employable methods include neural networking, reinforcement learning, and deep learning. The machine learning is not limited to supervised machine learning, and semi- supervised machine learning or unsupervised machine learning may be used.

For example, the learning model calculates a feature amount of input data to perform classification about the data. The feature amount is a numerical value indicating a feature of data, and is expressed in the form of, for example, an n-dimensional (n is a natural number) vector or an array of n elements. An algorithm for calculating the feature amount may be prepared separately from the learning model. In this case, the learning model is not required to calculate the feature amount, and a feature amount calculated by the algorithm is input to the learning model.

The service providing system 1c inputs, to the learning model, data that indicates the utilization situation of the user U in Service C and indicating the comparison results obtained from the service providing systems 1a and 1b. The learning model calculates a feature amount of the data, classifies the user U into one of being fraudulent and being authentic, and outputs the result of the classification. The service providing system 1c estimates fraudulence of the user U based on the output from the learning model.

When the output from the learning model indicates "authentic", the service providing system 1c estimates that the user U is not fraudulent in Service C, and permits the user U to use Service C. When the output from the learning model indicates "fraudulent", on the other hand, the service providing system 1c estimates that the user U is fraudulent in Service C, and limits the use of Service C by the user U.

The fraud estimation system S of this embodiment thus raises the precision of fraud estimation by estimating, with the use of the learning model, fraudulence of the user U who intends to use Service C. Details of this technology are described below. In the following description, the reference symbol of the user U who attempts user registration to Service C is omitted.

### [1-3. Functions implemented in Fraud Estimation System]

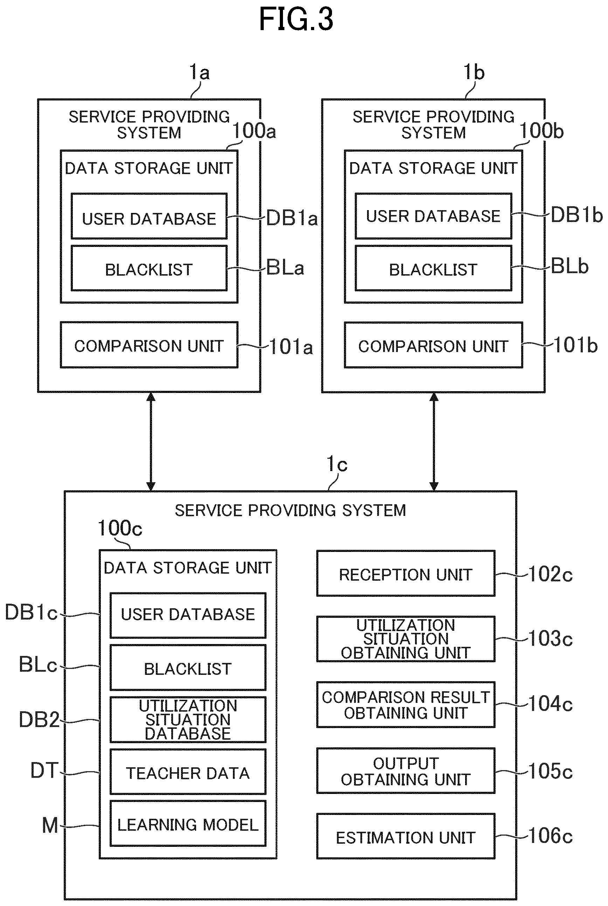

FIG. 3 is a function block diagram for illustrating an example of functions implemented in the fraud estimation system S. In this embodiment, a case in which functions implemented by the service providing systems 1a and 1b differ from functions implemented by the service providing system 1c is described. However, the service providing systems 1a to 1c may each have the same functions as in a modification example of the one embodiment of the present invention described later.

### [1-3-1. Functions implemented in Service A]

As illustrated in FIG. 3, a data storage unit 100a and a comparison unit 101a are implemented by the service providing system 1a of Service A.

### [Data Storage Unit]

The data storage unit 100a is implemented mainly by the storage unit 12a. The data storage unit 100a stores data that is required to execute processing described in this embodiment. As an example of the data to be stored in the data storage unit 100a, a user database DB1a of Service A, and a blacklist BLa of Service A are described here.

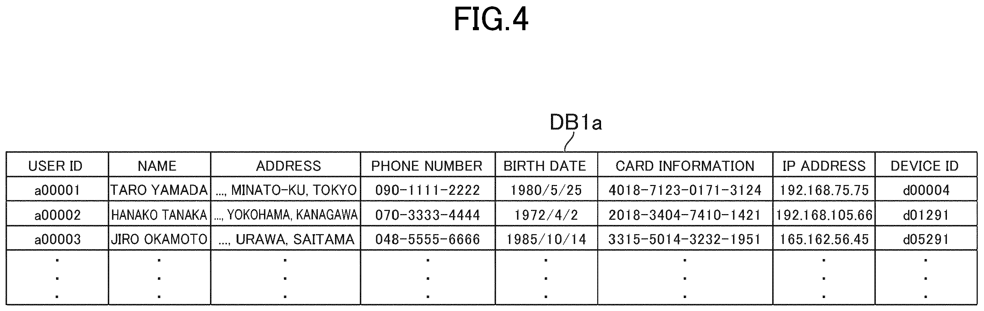

FIG. 4 is a table for showing a data storage example of the user database DB1a of Service A. As shown in FIG. 4, the user database DB1a is a database storing user information of a user who has executed user registration to Service A. The user database DB1a stores, for example, a user ID with which a user is uniquely identified, and registration information registered by the user at the time of user registration. The registration information is user information other than the user ID, for example, the user's personal information.

The user database DB1a stores a piece of user information for each of a plurality of items. An item is the type or content of user information. As shown in FIG. 4, the user database DB1a in this embodiment stores eight items of user information, including the user ID, the name, the address, the phone number, the birth date, the credit card number of a credit card, an IP address of the user terminal 20, and the device ID of the user terminal 20.

The user information to be stored in the user database DB1a is not limited to the example of FIG. 4. It is sufficient for the user database DB1a to store user information of any items, for example, user information of items including the place of work, the post, the age, the gender, a nickname, a face photo, SIM information of the user terminal 20, a password, biometric information or other types of authentication information, an email address, access location information, and access date.

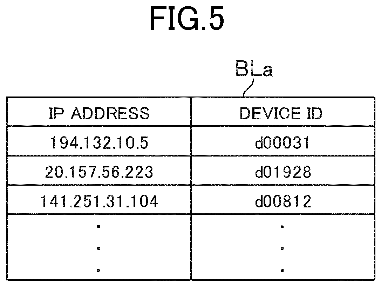

FIG. 5 is a table for showing a data storage example of a blacklist BLa of Service A. In this embodiment, two items of the IP address and the device ID are the blacklist items of Service A, and the IP address and the device ID of a fraudulent user in Service A are accordingly stored in the blacklist BLa of Service A. For example, an administrator of Service A operates his or her own terminal to register the IP address and the device ID of the fraudulent user to the blacklist BLa.

To give another example, the service providing system 1a analyzes activities of users, estimates a user who matches a criterion of a predetermined rule as a fraudulent user, and registers the IP address and the device ID of this fraudulent user to the blacklist BLa. The rule maybe any rule, for example, a rule about the settlement amount, the settlement frequency, access location, or access time. As still another example, the service providing system 1a may use a learning model that detects fraudulence of a user to detect a fraudulent user, and register the IP address and the device ID of the detected fraudulent user to the blacklist BLa.

The blacklist BLa may store user information of an item other than the blacklist item. For instance, user information of an item other than the IP address and the device ID of a fraudulent user (for example, the name or the address) may be obtained from the user database DB1a to be stored in the blacklist BLa along with the IP address and the device ID, which are the blacklist items.

Although a case of storing the IP address and the device ID in the same blacklist BLa is illustrated in FIG. 5, the IP address and the device ID may be stored in separate blacklists BLa. That is, the blacklist BLa of the IP address and the blacklist BLa of the device ID may be separately provided.

### [Comparison Unit]

The comparison unit 101a is implemented mainly by the control unit 11a. The comparison unit 101a compares user information of a target user in one service and user information of fraudulent users in another service.

"One service" is a service used by the target user. "Target user" is a user who is a target of fraud estimation. In other words, a target user is a user to be processed by processing of the estimation unit 106c described later. "Another service" is a service other than the one service. The same person as a user of "one service" may have performed user registration to "another service".

In this embodiment, a case of estimating a user's fraudulence in Service C is described, and Service C accordingly corresponds to "one service" while each of Service A and Service B corresponds to"another service". In the description of this embodiment, Service C can therefore be read as "one service", and Service A or Service B can be read as "another service". A user who attempts user registration in Service C can be read as "target user".

The comparison unit 101a compares user information of the target user in Service C and user information of fraudulent users in Service A. The fraudulent users in Service A are users on the blacklist BLa of Service A. Specifically, a fraudulent user in Service A is a user whose IP address or device ID is stored in the blacklist BLa of Service A.

Although a case of comparing to the IP address and the device ID, which are the blacklist items of Service A, is described in this embodiment, user information of any item may be compared. For instance, comparison to the name and the card number, which are the blacklist items of Service C, may be employed. User information of an item other than blacklist items may be compared.

In the case described in this embodiment, comparison to two items of user information, the IP address and the device ID, is performed. However, any number of items of user information may be compared. For example, only one item of user information may be compared, or three or more items of user information may be compared. Further, although the same number of items (two items) are compared in Service A and Service B in the case described in this embodiment, the number of items to be compared and the types of items to be compared may vary from one service to another.

For example, the comparison unit 101a obtains the IP address and device ID of the target user from the service providing system 1c of Service C. The comparison unit 101a obtains IP addresses and device IDs of fraudulent users in Service A based on the blacklist BLa.

The comparison unit 101a compares the IP address and device ID of the target user in Service C to the IP addresses and device IDs of the fraudulent users in Service A. The comparison unit 101a transmits the result of the comparison to the service providing system 1c of Service C. The comparison result may have any data format, and takes one of a value indicating that the user information is a match and a value indicating that the user information is not a match. In this embodiment, comparison to two items, the IP address and the device ID, is performed, and a comparison result of the IP address and a comparison result of the device ID are accordingly transmitted.

In this embodiment, the IP address and the device ID are compared, and a case in which the comparison unit 101a determines whether the IP address and the device ID are a complete match (identical) is accordingly described. When another type of user information, for example, the address or the email address, is compared, however, the comparison unit 101a may determine whether the user information is a partial match (similar). That is, whether the target user of Service C is the same person as a fraudulent user in Service A may be estimated by a partial match instead of a complete match. The partial match to be determined may be any one of forward match, middle match, and backward match.

### [1-3-2. Functions implemented in Service B]

As illustrated in FIG. 3, a data storage unit 100b and a comparison unit 101b are implemented by the service providing system 1b.

### [Data Storage Unit]

The data storage unit 100b is implemented mainly by the storage unit 12b. The data storage unit 100b stores data that is required to execute processing described in this embodiment. As an example of the data stored in the data storage unit 100b, a user database DB1b of Service B and a blacklist BLb of Service B are described here.

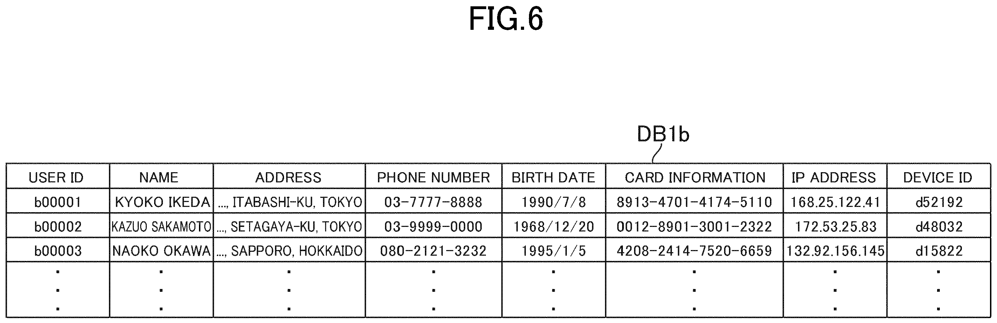

FIG. 6 is a table for showing a data storage example of the user database DB1b of Service B. As shown in FIG. 6, the user database DB1b of Service B is a database storing user information of a user who has executed user registration to Service B. In this embodiment, a case in which items stored in the user database DB1a of Service A and items stored in the user database DB1b of Service B are the same is described. Details of the item stored in the user database DB1b of Service B are the same as those of the user database DB1a of Service A, and a description on the details is therefore omitted.

In this embodiment, a unique user ID is issued to each service. One same person therefore has different user IDs in Service A and Service B. One same person who uses a plurality of credit cards may also have different card numbers in Service A and Service B. The same applies to other items, and user information of one same person may differ in Service A and Service B.

The user database DB1a of Service A and the user database DB1b of Service B may store items different from each other. For instance, the user database DB1a of Service A may store the address whereas the user database DB1b of Service B does not store the address. The same applies to Service C and, although a case in which a user database DB1c of Service C store items that are the same as the items stored in the user database DB1a of Service A and the user database DB1b of Service B is described in this embodiment, the user database DB1c may store items different from those of the user databases DB1a and DB1b. In each service, it is sufficient to register user information of items required for user registration to the service.

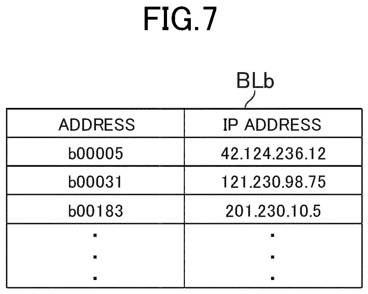

FIG. 7 is a table for showing a data storage example of the blacklist BLb of Service B. As shown in FIG. 7, two items, namely, the address and the IP address, are the blacklist items of Service B in this embodiment, and the blacklist BLb of Service B accordingly stores the address and the IP address of a fraudulent user in Service B.

The blacklist BLb of Service B differs from the blacklist BLa of Service A in blacklist item, and is the same as the blacklist BLa in the rest. Descriptions on the same points are therefore omitted. The omitted description can be found by reading "Service A", "service providing system 1a", "IP address", "device ID", and "blacklist BLa" in the description of the blacklist BLa of Service A as "Service B", "service providing system 1b", "address", "IP address", and "blacklist BLb", respectively.

### [Comparison Unit]

The comparison unit 101b is implemented mainly by the control unit 11b. The comparison unit 101b compares user information of a target user in Service C and user information of fraudulent users in Service B. Processing of the comparison unit 101b is the same as processing of the comparison unit 101a, and a description thereof is therefore omitted. The omitted description can be found by reading "Service A", "IP address", "device ID", "user database DB1a", and "blacklist BLa" in the description of the comparison unit 101a as "Service B", "address", "IP address", "user database DB1b", and "blacklist BLb", respectively.

### [3-3. Functions implemented in Service C]

As illustrated in FIG. 3, a data storage unit 100c, a reception unit 102c, a utilization situation obtaining unit 103c, a comparison result obtaining unit 104c, an output obtaining unit 105c, and an estimation unit 106c are implemented by the service providing system 1c.

### [Data Storage Unit]

The data storage unit 100c is implemented mainly by the storage unit 12c. The data storage unit 100c stores data that is required for executing processing described in this embodiment. As an example of the data stored in the data storage unit 100c, a user database DB1c of Service C, a blacklist BLc of Service C, a utilization situation DB2, teacher data DT, and a learning model M are described here.

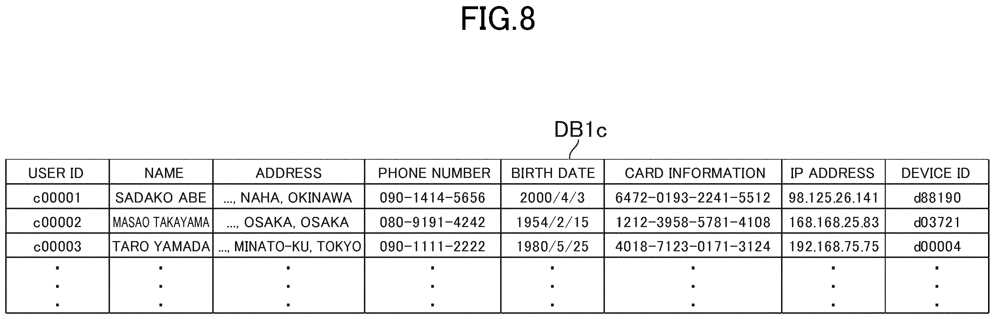

FIG. 8 is a table for showing a data storage example of the user database DB1c of Service C. As shown in FIG. 8, the user database DB1c of Service C is a database storing user information of a user who has executed user registration to Service C. In this embodiment, details of each item stored in the user database DB1c of Service C are the same as those of the user database DB1a of Service A and the user database DB1b of Service B, and a description on the details is therefore omitted.

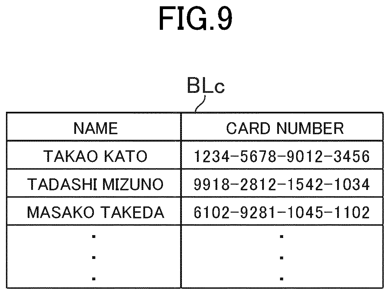

FIG. 9 is a table for showing a data storage example of the blacklist BLc of Service C. As shown in FIG. 9, the name and the card number are the blacklist items of Service C in this embodiment, and the blacklist BLc of Service C accordingly stores the name and the card number of a fraudulent user in Service C.

The blacklist BLc of Service C differs from the blacklist BLa of Service A in blacklist item, and is the same as the blacklist BLa in the rest. Descriptions on the same points are therefore omitted. The omitted description can be found by reading "Service A", "service providing system 1a", "IP address", "device ID", and "blacklist BLa" in the description of the blacklist BLa of Service A as "Service C", "service providing system 1c", "name", "card number" , and "blacklist BLc", respectively.

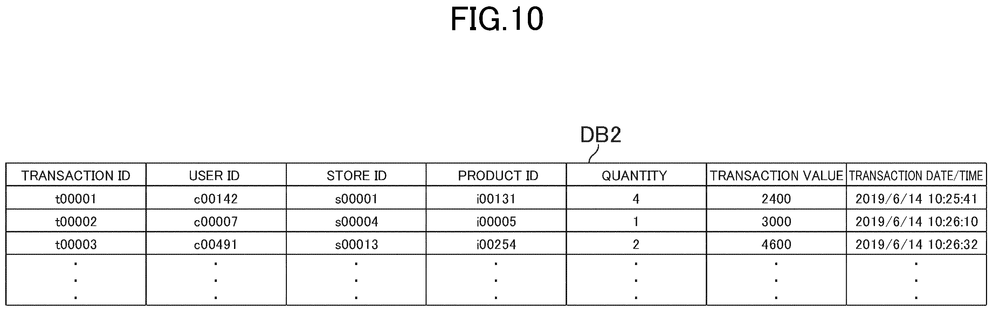

FIG. 10 is a table for showing a data storage example of the utilization situation database DB2. As shown in FIG. 10, the utilization situation database DB2 is a database in which the utilization situation of a user in Service C is stored. The utilization situation database DB2 may store the utilization situations of all users (for the entire period), or the utilization situations of some users (for a part of the period).

The utilization situation is information indicating how Service C has been used by a user. The utilization situation can be paraphrased as a utilization history or utilization content. The utilization situation reflects the user's activities in Service C. It is sufficient to store, as the utilization situation, information adapted to the content of Service C. In this embodiment, a case in which Service C is an electronic transaction service is described, and the utilization situation in this embodiment can accordingly be paraphrased as a merchandise purchase situation.

As shown in FIG. 10, the utilization situation database DB2 stores a transaction ID for uniquely identifying a transaction, a user ID, a store ID for uniquely identifying a store, a product ID for uniquely identifying a commercial product, the quantity of the product, a transaction value (payment amount or settlement amount) , and a transaction date/time, or similar types of information. The utilization situation database DB2 is updated each time a user uses Service C.

For instance, when a product is purchased in a store in an online shopping mall of Service C, the service providing system 1c issues a transaction ID, and the user ID of a user who has made the purchase, the store ID of the store, the product ID of the product, a product quantity specified by the user, a transaction value based on the unit price and quantity of the product, and a transaction date/time, which is the current date/time, are stored in the utilization situation database DB2. The utilization situation stored in the utilization situation database DB2 is not limited to the example given above. It is sufficient to store information indicating the situation of a user's utilization of Service C, and the stored information may include, for example, access location information or a delivery destination.

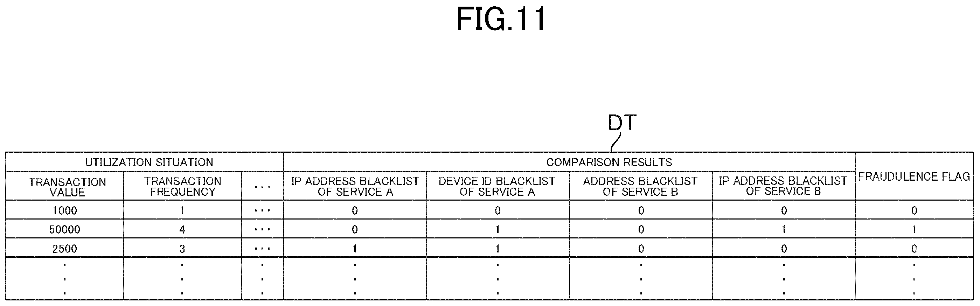

FIG. 11 is a table for showing a data storage example of the teacher data DT. The teacher data DT is data to be used in learning of the learning model. In other words, the teacher data DT is data for adjusting parameters of the learning model. The teacher data DT may also be referred to as "learning data" or "training data". The teacher data DT is data in which data having the same format as the format of input data is paired with output serving as the correct answer.

In this embodiment, whether a target user is fraudulent is classified, and the output accordingly takes one of a value indicating being "fraudulent" and a value indicating being "authentic". For example, the teacher data DT is created by an administrator of Service C, and the presence/absence of fraudulence is determined by the administrator. That is, the administrator determines whether a user corresponding to the input part of the teacher data DT has actually committed fraudulence to determine the value of the output part of the teacher data DT.

As shown in FIG. 11, the utilization situation (for example, the transaction value and transaction frequency) of a user in Service C and comparison results in Service A and Service B are paired with a fraudulence flag indicating the presence/absence of fraudulence, and the pair is stored in the teacher data DT. The utilization situation and the comparison results are input (a question), and the fraudulence flag is output (an answer).

The fraudulence flag is information indicating whether a user is fraudulent. In the data storage example of FIG. 11, the value "1" of the fraudulence flag means "fraudulent" and the value "0" of the fraudulence flag means "authentic". The value "1" of a comparison result means a match of user information, and the value "0" of a comparison result means no match of user information.

The data storage unit 100c stores a program (an algorithm) and parameters of the learning model M. The learning model M has learned the teacher data DT. Neural networking and various other methods used in supervised machine learning are employable for the learning processing itself, and parameters of the learning model M are adjusted so that an input-output relationship indicated by the teacher data DT is obtained. The learning model M calculates a feature amount of input data, and outputs a value indicating a classification result.

The learning model M classifies a user into one of being fraudulent and being authentic, and accordingly outputs one of a value indicating "fraudulent" and a value indicating "authentic". The learning model M may output a score indicating the probability (the degree of certainty) of the classification. In this case, the learning model M may output at least one of a score that indicates the probability of a user being fraudulent and a score that indicates the probability of a user being authentic. The result of the classification by the learning model M may also be referred to as "label". The output in this case is a label ID for identifying a label.

The learning model M has learned a relationship between the result of comparing user information of a user in Service C to user information of fraudulent users in Service A and Service B and the presence/absence of fraudulence in Service C. In this embodiment, Service A and Service B each correspond to "another service", which means that there are a plurality of other services, and the learning model M has accordingly learned relationships between a plurality of comparison results respectively corresponding to the plurality of other services and the presence/absence of fraudulence in "one" service. The number of other services whose comparison results have been learned by the learning model M can be any number, and may be only one or three or more.

In this embodiment, the teacher data DT also indicates a relationship between the utilization state and the presence/absence of fraudulence in Service C, and the learning model M has therefore learned a relationship between the utilization situation in Service C and the presence/absence of fraudulence in Service C as well. In this embodiment, a plurality of items of user information are registered to each of Service C, Service A, and Service B, and the learning model M has accordingly learned relationships between a plurality of comparison results respectively corresponding to the plurality of items and the presence/absence of fraudulence in Service C. The number of items whose comparison results have been learned by the learning model M can be any number, and a comparison result of only one item may have been learned or comparison results of three or more items may have been learned.

In this embodiment, fraud estimation in Service A and Service B is based on user information of predetermined items (the blacklist items of Service A and the blacklist items of Service B, respectively) , and the learning model M has therefore learned relationships between comparison results of user information of the predetermined items and the presence/absence of fraudulence in Service C. That is, the learning model M has learned relationships between comparison results of the blacklist items in Service A and Service B and the presence/absence of fraudulence in Service C. In the following description, the reference symbol of the learning model M is omitted.

### [Reception Unit]

The reception unit 102c is implemented mainly by the control unit 11c. The reception unit 102c receives a utilization request for the use of Service C by the target user. The utilization request is a request transmitted in order to use Service C. The utilization request may include any type of information, for example, any item of user information about the target user, or the content of a service intended to be used by the user. In this embodiment, Service C is an electronic transaction service, and the utilization request accordingly includes information about a product (for example, a product ID and quantity) to be purchased by the target user. The reception unit 102c receives the utilization request by receiving information that has been input from the user terminal 20 by the user with the use of the operation unit 24.

### [Utilization Situation Obtaining Unit]

The utilization situation obtaining unit 103c is implemented mainly by the control unit 11c. The utilization situation obtaining unit 103c obtains the situation of the target user's utilization of Service C. In this embodiment, the utilization situation is stored in the utilization situation database DB2, and the utilization situation obtaining unit 103c therefore obtains the utilization situation by referring to the utilization situation database DB2 stored in the data storage unit 100c. Information equivalent to the utilization situation may be included in the utilization request, and the utilization situation obtaining unit 103c may also obtain the utilization situation by referring to the utilization request received from the user terminal 20.

The content of the utilization situation obtained by the utilization situation obtaining unit 103c may be any content. In this embodiment, a case in which the obtained utilization situation is a utilization situation about a blacklist item is described because fraud estimation in Service C is based on user information of blacklist items. Blacklist items are an example of the predetermined items in the present invention. A blacklist item (for example, the IP address or the device ID in Service A, the address or the IP address in Service B, or the name or the card number in Service C) in the description of this embodiment can therefore be read as a predetermined item. Whitelist items in a modification example described later may correspond to the predetermined items.

The utilization situation about a blacklist item is a utilization situation relating to the blacklist item. When the blacklist item is the card number, for example, the transaction value, the transaction frequency, and other types of information relating to settlement serve as the utilization situation. The transaction value is the amount of money per transaction. The transaction frequency is the number of times that a transaction has been made in a fixed period (for example, a day to about several months) .

To give another example, when the blacklist item is the user ID, the number of times and frequency of login with the same user ID serve as the utilization situation. In still another example in which the blacklist item is the name, the number of times and frequency of service application with the same name serve as the utilization situation. The utilization situation about an item may be obtained for other items in the same manner.

### [Comparison Result Obtaining Unit]

The comparison result obtaining unit 104c is implemented mainly by the control unit 11c. The comparison result obtaining unit 104c obtains a comparison result of comparison between user information of a target user in Service C and user information of fraudulent users in Service A and Service B. In this embodiment, Service A and Service B each correspond to "another service", which means that there are a plurality of other services, and the comparison result obtaining unit 104c accordingly obtains a plurality of comparison results respectively corresponding to the plurality of other services.

In this embodiment, comparison to a plurality of blacklist items in Service A and a plurality of blacklist items in Service B is performed, and the comparison result obtaining unit 104c accordingly obtains a plurality of comparison results respectively corresponding to the plurality of items. The comparison result obtaining unit 104c obtains a comparison result of each of the plurality of items. For instance, in Service A, the blacklist items are the IP address and the device ID, and hence the comparison result obtaining unit obtains a comparison result of the IP address and a comparison result of the device ID. In Service B, the address and the IP address are the blacklist items, and hence the comparison result obtaining unit obtains a comparison result of the address and a comparison result of the IP address.

Inthis embodiment, instead of executing comparison processing in Service C, Service A and Service B handle the comparison of user information of a target user in Service C to user information of fraudulent users in other services. The comparison result obtaining unit 104c therefore obtains the results of the comparison from Service A and Service B. That is, the card numbers of Service A and Service B are not transmitted over the network N when the comparison result obtaining unit 104c obtains the comparison results. The comparison result obtaining unit 104c obtains the comparison result corresponding to Service A and the comparison result corresponding to Service B separately for Service A and Service B.

### [Output Obtaining Unit]

The output obtaining unit 105c is implemented mainly by the control unit 11c. The output obtaining unit 105c obtains output from the learning model based on a comparison result obtained by the comparison result obtaining unit 104c. In this embodiment, Service A and Service B each correspond to "another service", which means that there are a plurality of other services, and the output obtaining unit 105c accordingly obtains output from the learning model based on a plurality of comparison results . In this embodiment, the utilization situation in Service C is used as well, and the output obtaining unit obtains output from the learning model based further on the situation of the target user's utilization.

For example, the output obtaining unit 105c inputs, to the learning model, input data that indicates the utilization situation obtained by the utilization situation obtaining unit 103c and that indicates each of the plurality of comparison results obtained by the comparison result obtaining unit 104c. The input data has the same format as the format of the input part of the teacher data DT shown in FIG. 11. The learning model calculates a feature amount of the input data, and outputs a classification result, which is the result of classifying the input data, and indicates one of being "fraudulent" and being "authentic". The output unit obtaining unit 105c obtains the output classification result.

### [Estimation Unit]

The estimation unit 106c is implemented mainly by the control unit 11c. The estimation unit 106c estimates fraudulence of a target user based on the output from the learning model. The estimation is to determine whether a target user is a fraudulent user. The result of the estimation by the estimation unit 106c may be the final result of determination about whether the target user is a fraudulent user, or the administrator may be left to determine after the estimation result is provided. The estimation unit 106c refers to the output from the learning model to estimate the target user to be fraudulent when the classification result indicates "fraudulent", and estimate the target user to be authentic when the classification result indicates "authentic".

In this embodiment, fraud estimation is executed when a user is about to use a service, and a target user is accordingly a user who has finished user registration or a user who inputs user information on the spot at the time of use of the service. User registration is to register user information to Service C in order to start using Service C. User registration is sometimes called use registration or service registration.

The estimation unit 106c estimates fraudulence of a target user when the target user is about to use Service C. The time when the target user is about to use Service C is the time of reception of the utilization request, or any point in time subsequent to the reception. For example, the estimation unit 106c estimates fraudulence of the target user after the user registration is completed. The estimation unit 106c may estimate fraudulence of the target user before the user registration is completed.

### [4. Processing executed in Fraud Estimation System]

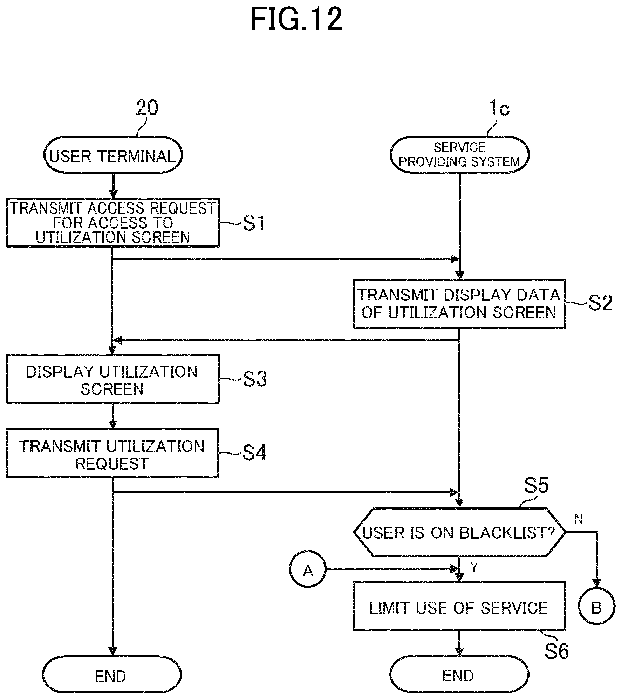

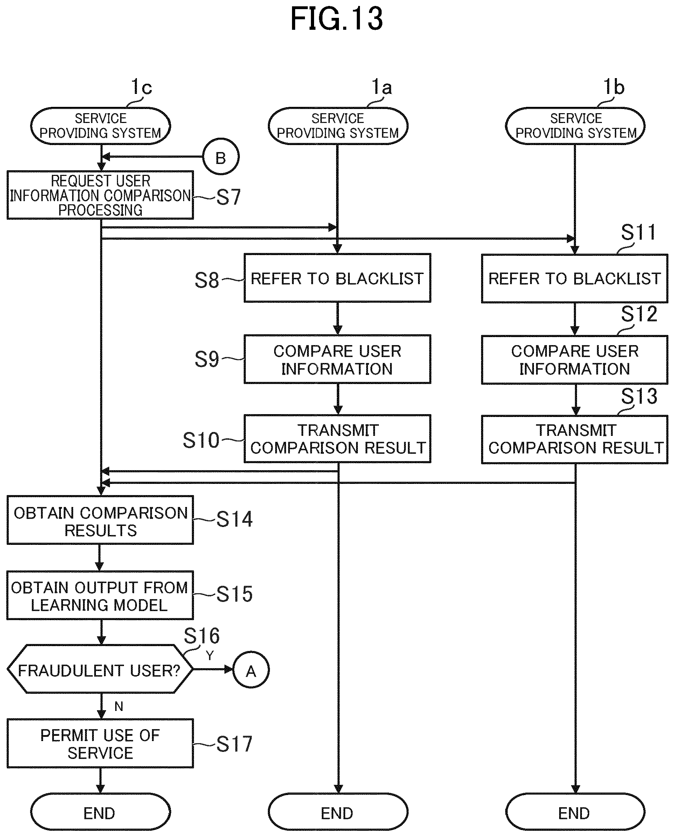

FIG. 12 and FIG. 13 are flow charts for illustrating an example of processing executed in the fraud estimation system S. The processing illustrated in FIG. 12 and FIG. 13 is executed by the control units 11 and 21 by operating as programmed by programs that are stored in the storage units 12 and 22, respectively. The processing described below is an example of processing that is executed by the function blocks illustrated in FIG. 3.

As illustrated in FIG. 12, first, the control unit 21 on the user terminal 20 transmits an access request to access a utilization screen of Service C to the service providing system 1c (Step S1). The utilization screen is a screen for using Service C, for example, a product page for purchasing a product. The access request is transmitted at any timing, for example, at the time when the URL of the utilization screen is selected.

In the service providing system 1c, the control unit 11c receives the access request and transmits display data of the utilization screen to the user terminal 20 (Step S2). The display data may have any data format and is, for example, HTML data. It is assumed that the display data of the utilization screen is stored in advance in the storage unit 12c.

On the user terminal 20, the control unit 21 receives the display data and displays the utilization screen on the display unit 25 based on the display data (Step S3). When the utilization screen is displayed in Step S3, the user operates the operation unit 24 to input the content of utilization of Service C. For example, the user specifies the quantity of the product displayed on the product page. The premise here is that the user has already logged in to Service C in advance, and that the user ID is stored on the user terminal 20. When Service C is designed so that a user can use Service C without user registration, the user inputs his/her user information at this point.

The control unit 21 transmits a utilization request to the service providing system 1c (Step S4). It is assumed that the utilization request includes the quantity of the product or another type of information input by the user, and the user information, which is the user ID or the like. An example of the time to transmit the utilization request is when a button for purchasing the product is selected.

The control unit 11c in the service providing system 1c receives the utilization request, refers to the user database DB1c to obtain the user's name and card number, and determines whether the user's name and card number are stored in the blacklist BLc of Service C (Step S5). In Step S5, the control unit 11c searches the blacklist BLc of Service C with the user's name and card number as a query. When the means of settlement selected by the user is bank transfer or means other than cards, the card number may not be referred to. The determination in Step S5 may be executed at the time of reception of the access request in Step S2.

When it is determined that the name or the card number is stored in the blacklist BLc (Step S5: Y), the control unit 11c estimates the user to be fraudulent and limits the use of service (Step S6). In Step S6, the control unit 11c denies the user the use of service and imposes a restriction so that the user is prohibited from using the service. In this case, a message to the effect that "the service cannot be used with this card number" may be displayed on the user terminal 20. To give another example, the control unit 11c may withhold the use of service and transmit a notification to the administrator of Service C to inquire about whether the user registration is to be permitted. In this case, the user registration is granted when the administrator of Service C gives permission.

When it is determined that the card number is not stored in the blacklist BLc (Step S5: N), on the other hand, the processing proceeds to steps in FIG. 13, and the control unit 11c requests each of the service providing systems 1a and 1b to execute comparison processing for comparing the user information, based on the user database DB1c (Step S7). As a way to issue the request for the comparison processing, the transmission of data in a predetermined format is sufficient, and the data is to include the user information of an item to be compared. The control unit 11c transmits, to the service providing system 1a, an IP address and device ID of the user who has made the utilization request and transmits, to the service providing system 1b, an address and IP address of the user who has made the utilization request. It is assumed that information for identifying which item of user information is to be transmitted to which service providing system 1 is stored in the storage unit 12c in advance.

The control unit 11a in the service providing system 1a receives the IP address and the device ID, refers to the blacklist BLa of Service A (Step S8), and compares the received IP address and device ID to IP addresses and device IDs on the blacklist BLa, respectively (Step S9). In Step S9, the control unit 11a determines whether the former and the latter match.

The control unit 11a transmits the result of the comparison in Step S9 to the service providing system 1c (Step S10). In Step S10, the control unit 11a transmits, for each of the IP address and the device ID, a comparison result indicating a match or a comparison result indicating no match, based on the result of the processing of Step S9. That is, the control unit 11a transmits a comparison result indicating whether there is a fraudulent user whose IP address is a match, and a comparison result indicating whether there is a fraudulent use whose device ID is a match.

Meanwhile, the control unit 11b in the service providing system 1b receives the address and the IP address, refers to the blacklist BLb of Service B (Step S11), and compares the received address and IP address to addresses and IP addresses on the blacklist BLb, respectively (StepS12). InStepS12, the control unit 11b determines whether the former and the latter match.

The control unit 11b transmits the result of the comparison in Step S12 to the service providing system 1c (Step S13). In Step S13, the control unit 11a transmits, for each of the address and the IP address, a comparison result indicating a match or a comparison result indicating no match, based on the result of the processing of Step S12. That is, the control unit 11b transmits a comparison result indicating whether there is a fraudulent user whose address is a match and a comparison result indicating whether there is a fraudulent user whose IP address is a match.

The control unit 11c in the service providing system 1c receives the comparison results from the service providing systems 1a and 1b (Step S14), obtains the utilization situation based on the utilization situation database DB2, and inputs the utilization situation along with the received comparison results to the learning model to obtain output from the learning model (Step S15). In Step S15, the control unit 11c obtains the user's utilization situation in the form of transaction value and transaction frequency or another form, based on the utilization request received from the user terminal 20 and the utilization situation database DB2. The control unit 11c inputs input data, which includes the obtained utilization situation and the received comparison results, to the learning model to obtain output from the learning model.

The control unit 11c determines whether the output from the learning model indicates a fraudulent user (Step S16). When it is determined that a fraudulent user is indicated (Step S16: Y), the user is estimated to be fraudulent, and the processing shifts to Step S6 to limit the use of service. When it is determined that the output from the learning model indicates an authentic user (Step S16: N), on the other hand, the control unit 11c permits the use of service (Step S17), and this processing is ended. In Step S17, the user is estimated to be authentic and the service is provided to the user.

According to the fraud estimation system S of this embodiment, the precision of fraud estimation can be raised by estimating fraudulence of a target user with output that is obtained from the learning model based on the result of comparison between user information of the target user in Service C and user information of fraudulent users in Service A and Service B. The raised precision of fraud estimation enables the prevention of fraudulence by a fraudulent user in Service C and the enhancement of security in Service C. For instance, fraudulence by a fraudulent user can be prevented in Service C even when a target user's name or card number is not stored in the blacklist BLc of Service C because, as long as the target user has been registered as a fraudulent user in Service A or Service B, fraudulence of the target user can be estimated. The use of a learning model in which the relationship of Service A and Service B to Service C has been learned in a comprehensive manner also accomplishes, for example, prevention of excessively strict security.

The fraud estimation system S can also be effectively raised in the precision of estimating a user's fraudulence and can improve security in Service C even more by basing the acquisition of the output from the learning model and the estimation of fraudulence of a target user on a plurality of comparison results respectively corresponding to the plurality of services, namely, Service A and Service B. For instance, with the use of the blacklists BLa and BLb of the plurality of other services, instead of the use of the blacklist of one other service, fraudulence of a target user can be estimated even when the target user is a user who has not committed fraudulence in a specific other service, as long as the target user has committed fraudulence in a different other service. Further, excessively strict security can effectively be prevented while raising the precision of fraud estimation by taking into consideration the learning model in which the relationship with Service A and Service B has been learned in a comprehensive manner, because the relationship with Service C varies between Service A and Service B.

The learning model has also learned a relationship between the utilization situation in Service C and the presence/absence of fraudulence in Service A and Service B, and the fraud estimation system S can have an effectively raised precision of estimating a user's fraudulence and even more improved security in Service C by obtaining output from the learning model based on the situation of utilization by a target user.

The fraud estimation system S obtains output from the learning model based also on a utilization situation about a blacklist item of Service C to take a utilization situation more important to Service C into account. This can effectively raise the precision of estimating a user's fraudulence and can improve security in Service C even more.

The learning model has also learned relationships between a plurality of comparison results respectively corresponding to a plurality of items and the presence/absence of fraudulence in Service C. The fraud estimation system S can have an effectively raised precision of estimating a user's fraudulence and even more improved security in Service C by obtaining output from the learning model based on the plurality of comparison results respectively corresponding to the plurality of items and by estimating fraudulence from a more multidimensional viewpoint.

The learning model has also learned relationships between comparison results of user information of blacklist items of Service A and Service B and the presence/absence of fraudulence in Service C. The fraud estimation system S can have an effectively raised precision of estimating a user's fraudulence and even more improved security in Service C by obtaining comparison results of the blacklist items of Service A and Service B.

The user information comparison processing is executed in the service providing systems 1a and 1b, and the service providing system 1c obtains the results of the comparison from the service providing systems 1a and 1b, which means that user information of Service A and Service B is not transmitted over the network N. Leakage of personal information from Service A and Service B can therefore be prevented. Processing load on the service providing system 1c can be lightened as well because the service providing system 1c does not execute the comparison processing.

The fraud estimation system S can also prevent a fraudulent user from using a service by estimating fraudulence of a target user when Service C is used.

### [5. Modification Example]

The present invention is not limited to the embodiment described above. The present invention can be modified to suit individual cases without departing from the spirit of the present invention.
(1) For example, although a case of performing comparison to the blacklist items of Service A and Service B is described in the embodiment, an item other than the blacklist items of Service A and Service B may be compared. For example, an item that is a blacklist item of Service C and that is not any of the blacklist items of Service A and Service B may be compared. To give another example, an item that is none of the blacklist items of Service A to Service C may be compared.

As descried in the embodiment, fraud estimation in Service A and Service B is based on user information of a blacklist item, which is the IP address or the like. A blacklist item corresponds to a first item in Modification Example (1) of the invention. The learning model has learned a relationship between the comparison result of user information of a second item and the presence/absence of fraudulence in Service C. The second item is an item that is not the first item and that is other than the blacklist items of Service A and Service B. The second item is, for example, the card number or the phone number. A case in which the card number corresponds to the second item is described in this modification example.

In this modification example, the card number, which is not a blacklist item of Service A, is to be compared, and the comparison unit 101a accordingly obtains card numbers of fraudulent users by referring to the user database DB1a. The comparison unit 101a obtains card numbers that are associated with IP addresses or device IDs stored in the blacklist BLa. When fraudulent users' user information of other items is to be stored in the blacklist BLa as well, the comparison unit 101a may refer to the blacklist BLa to obtain card numbers of fraudulent users. Similarly, the comparison unit 101b of Service B may obtain card numbers of fraudulent users by referring to the user database DB1b. Comparison processing itself is the same as that in the embodiment, and a description thereof is therefore omitted.

The comparison result obtaining unit 104c obtains the result of comparing the card numbers. The method of obtaining the comparison result is the same as that in the embodiment. Processing of the estimation unit 106c is also the same as that in the embodiment.

According to Modification Example (1), the precision of fraud estimation can be effectively raised by estimating fraudulence of a target user based on the result of comparing a card number of the target user in Service C to card numbers of fraudulent users in Service A and Service B, which do not use the card number as a blacklist item. The raised precision of fraud estimation can enhance security in Service C even more. For instance, fraudulence by a fraudulent user can be prevented in Service C even when a card number of a target user is not stored in the blacklist BLc of Service C because, as long as this card number has been registered by a fraudulent user to Service A or Service B, fraudulence of the target user can be estimated by utilizing the blacklist BLa of Service A and the blacklist BLb of Service B.

(2) For example, although a case in which fraudulence of a target user in Service C is estimated with the use of user information of fraudulent users in Service A and Service B is described in the embodiment, user information of authentic users in Service A and Service B may be used to estimate fraudulence of a target user in Service C. In this modification example, a whitelist instead of a blacklist is prepared in each service providing system 1.

The whitelist is a list in which user information about authentic users is stored. In other words, the whitelist is a list storing information capable of identifying an authentic user. An authentic user on the whitelist is not limited in the use of service.

The whitelist may be edited manually by an administrator of the service, or may be edited automatically through analysis performed by the service providing system 1 on a user's activity. Items of user information to be stored in the whitelist (hereinafter referred to as "whitelist items") may be common to all services. In this embodiment, it is assumed that whitelist items defined for a service are items adapted to the service.

The learning model in this modification example has learned a relationship between the result of comparing user information of a user in Service C to user information of authentic users in Service A and Service B and the presence/absence of fraudulence in Service C. The teacher data DT is data that indicates pairs having this relationship. The method of learning itself is as described in the embodiment, and can be understood by reading "fraudulent user" in the description of the embodiment as "authentic user".

The comparison result obtaining unit 104c of this modification example obtains the result of comparison between user information of a target user in Service C and user information of authentic users in Service A and Service B. The result of the comparison takes any one of a value that indicates a match to user information of an authentic user and a value that indicates no match to user information of any authentic user. Processing of the output obtaining unit 105c and processing of the estimation unit 106c are also as described in the embodiment, and can be understood by reading "fraudulent user" in the description of the embodiment as "authentic user".

According to Modification Example (2), fraudulence of a target user in Service C is estimated with the use of whitelists in Service A and Service B, to thereby be able to raise the precision of estimating a user's fraudulence and improve security in Service C even more.

It is sufficient for the comparison result obtaining unit 104c to obtain the result of comparison to user information of fraudulent users or authentic users in another service, and the comparison result obtaining unit 104c may obtain only any one of the result of comparison to fraudulent users and the result of comparison to authentic users, or both of the results. In short, it is sufficient to estimate fraudulence of a target user with the use of at least one of the blacklist and the whitelist in another service.

### [3-3. Other Modification Examples]

(3) For example, the modification examples described above may be combined.

For example, although the user databases DB1a to DB1c are prepared as separate databases for separate services in the case described above, a user database common to all services maybe prepared. To give another example, any item may be set as a blacklist item, and an item highly probable to be used when fraudulence is committed in the service may be set as a blacklist item. To give still another example, the number of other services is not limited to two, and there may be only one other service or three or more other services.

For example, although the learning model has learned not only user information comparison results but also the utilization situation of Service C in the case described above, the utilization situation of Service C may not particularly have been learned by the learning model. In this case, fraudulence of a target user is estimated without using the utilization situation of Service C. For example, although a case of executing fraudulence estimation at the time of use of service is described above, fraud estimation may be executed at any other timing. For instance, it is not particularly required to execute fraud estimation when a user uses the service, and fraud estimation may be executed at timing specified by the administrator of Service C.

When the service providing system 1c is in affiliation with many services, for example, an item to be compared may not be registered in some of the other services. The service providing system 1c may therefore identify a service in which the item to be compared is registered and request the service providing system 1 of the identified service to execute comparison processing. In this case, information indicating what items of user information are registered in which service is registered in the service providing system 1c.

For example, although estimation of a target user's f raudulence in Service C is taken as an example, fraudulence of a target user in Service A may be estimated. In this case, the service providing system 1a has the same functions as those of the service providing system 1c described in the embodiment, and the service providing system 1c has the same function as that of the comparison unit 101a of the service providing system 1a and the comparison unit 101b of the service providing system 1b. For example, the service providing system 1a transmits user information of a target user who attempts user registration to Service A to the service providing systems 1b and 1c, and obtains comparison results from the service providing systems 1b and 1c. The service providing system 1a inputs the comparison results to the learning model to estimate fraudulence of the target user.

For example, fraudulence of a target user in Service B may be estimated. In this case, the service providing system 1b has the same functions as those of the service providing system 1c described in the embodiment, and the service providing system 1c has the same function as that of the comparison unit 101a of the service providing system 1a and the comparison unit 101b of the service providing system 1b. For example, the service providing system 1b transmits user information of a target user who attempts user registration to Service B to the service providing systems 1a and 1c, and obtains comparison results from the service providing systems 1a and 1c. The service providing system 1b inputs the comparison results to the learning model to estimate fraudulence of the target user.

For example, all service providing systems 1 may have the same functions. To give another example, although a blacklist item is set down for each service separately in the case described above, a blacklist item common to a plurality of services may be used. For instance, the card number may be a blacklist item in all of Service A to Service C. In this case, it is sufficient for the comparison units 101a and 101b to obtain user information to be compared with reference to the blacklists, without particularly referring to the user databases DB1a and DB1b. To give still another example, although the fraud estimation system S includes the service providing systems 1a and 1b in the case described above, the service providing systems 1a and 1b may \be systems outside the fraud estimation system S.

To give another example, the main functions, which are implemented by the server 10 in the case described above, may be divided among a plurality of computers. The functions may be divided among, for example, the server 10 and the user terminal 20. When the fraud estimation system S includes a plurality of server computers, for example, the functions may be divided among the plurality of server computers. To give still another example, the data that is stored in the data storage units 100a to 100c in the description given above may be stored on a computer other than the server 10.

## Claims

1. A fraud estimation system (S), comprising:
storage means (100c) for storing a learning model that has learned a relationship between a comparison result that is a result of comparing user information of a user in one service (C) to user information of a fraudulent user or an authentic user in another service (A, B) and presence or absence of fraudulence in the one service (C);
comparison result obtaining means (104c) for obtaining a comparison result that is a result of comparing user information of a target user in the one service (C) and user information of a fraudulent user or an authentic user in the another service (A, B);
output obtaining means (105c) for obtaining output from the learning model based on the comparison result;
estimation means (106c) for estimating fraudulence of the target user based on the output from the learning model; and
control means (11c) for, when the estimation means estimates that the target user is fraudulent, limiting the use of the one service (C) by the target user.

2. The fraud estimation system (S) according to claim 1,
wherein the learning model has learned a relationship between a plurality of comparison results respectively corresponding to a plurality of other services (A, B) and the presence or absence of fraudulence in the one service,
wherein the comparison result obtaining means (104c) is configured to obtain a plurality of comparison results respectively corresponding to the plurality of other services (A, B), and
wherein the output obtaining means (105c) is configured to obtain output from the learning model based on the plurality of comparison results.

3. The fraud estimation system (S) according to claim 1 or 2,
wherein the learning model has further learned a relationship between a utilization situation in the one service (C) and the presence or absence of fraudulence in the one service (C),
wherein the fraud estimation system (S) further comprises utilization situation obtaining means for obtaining a utilization situation of the one service (C) by the target user, and
wherein the output obtaining means (105c) is configured to obtain output from the learning model based on the utilization situation by the target user.

4. The fraud estimation system (S) according to claim 3,
wherein, in the one service (C), fraudulence is estimated based on user information of a predetermined item, and
wherein the utilization situation is a utilization situation about the predetermined item.

5. The fraud estimation system (S) according to any one of claims 1 to 4,
wherein, in the one service (C) and the another service (A, B) each, a plurality of items of user information are registered,
wherein the learning model has learned relationships between a plurality of comparison results respectively corresponding to the plurality of items and the presence or absence of fraudulence in the one service (C),
wherein the comparison result obtaining means (104c) is configured to obtain a plurality of comparison results respectively corresponding to the plurality of items, and
wherein the output obtaining means (105c) is configured to obtain output from the learning model based on the plurality of comparison results.

6. The fraud estimation system (S) according to any one of claims 1 to 5,
wherein, in the another service (A, B), fraudulence is estimated based on user information of a predetermined item,
wherein the learning model has learned a relationship between a comparison result of user information of the predetermined item and the presence or absence of fraudulence in the one service (C), and
wherein the comparison result obtaining means (104c) is configured to obtain a comparison result of the predetermined item.

7. The fraud estimation system (S) according to any one of claims 1 to 6,
wherein, in the another service (A, B), fraudulence is estimated based on user information of a first item,
wherein the learning model has learned a relationship between a comparison result of user information of a second item and the presence or absence of fraudulence in the one service (C), and
wherein the comparison result obtaining means (104c) is configured to obtain a comparison result of the second item.

8. The fraud estimation system (S) according to any one of claims 1 to 7,
wherein, in the another service (A, B), user information of the target user in the one service (C) and user information of a fraudulent user or an authentic user in the another service (A, B) are compared, and
wherein the comparison result obtaining means (104c) is configured to obtain a result of the comparison from the another service (A, B).

9. The fraud estimation system (S) according to any one of claims 1 to 8, further comprising reception means (102c) for receiving a utilization request that is a request for use of the one service (C) by the target user,
wherein the estimation means (106c) is configured to estimate fraudulence of the target user when the one service (C) is used by the target user.

10. A computer-implemented fraud estimation method, comprising:
a comparison result obtaining step (S14) of obtaining a comparison result that is a result of comparing user information of a target user in one service (C) and user information of a fraudulent user or an authentic user in another service (A, B);
an output obtaining step (S15) of obtaining output from a learning model based on the comparison result, the learning model having learned a relationship between a comparison result that is a result of comparing user information of a user in the one service (C) to user information of a fraudulent user or an authentic user in the another service (A, B) and presence or absence of fraudulence in the one service (C);
an estimation step (S16) of estimating fraudulence of the target user based on output from the learning model; and
a control step (S6) of, when the estimation step estimates that the target user is fraudulent, limiting the use of the one service (C) by the target user.

11. A program for causing a computer (1c) to function as:
comparison result obtaining means (104c) for obtaining a comparison result that is a result of comparing user information of a target user in one service (C) and user information of a fraudulent user or an authentic user in another service (A, B);
output obtaining means (105c) for obtaining output from a learning model based on the comparison result, the learning model having learned a relationship between a comparison result that is a result of comparing user information of a user in the one service (C) to user information of a fraudulent user or an authentic user in the another service (A, B) and presence or absence of fraudulence in the one service (C);
estimation means (106c) for estimating fraudulence of the target user based on output from the learning model; and
control means (11c) for, when the estimation means estimates that the target user is fraudulent, limiting the use of the one service by the target user.

## Patentansprüche

1. Betrugsabschätzungssystem (S), umfassend:
Speicherungsmittel (100c) zum Speichern eines Lernmodells, das eine Beziehung zwischen einem Vergleichsergebnis, das ein Ergebnis des Vergleichens von Benutzerinformationen eines Benutzers in einem Service (C) mit Benutzerinformationen eines betrügerischen Benutzers oder eines authentischen Benutzers in einem anderen Service (A, B) ist, und dem Vorhandensein oder Fehlen von Betrug in dem einen Service (C) gelernt hat;
Vergleichsergebniserhaltungsmittel (104c) zum Erhalten eines Vergleichsergebnisses, das ein Ergebnis des Vergleichens von Benutzerinformationen eines Zielbenutzers in dem einen Service (C) und Benutzerinformationen eines betrügerischen Benutzers oder eines authentischen Benutzers in dem anderen Service (A, B) ist;
Ausgabeerhaltungsmittel (105c) zum Erhalten einer Ausgabe von dem Lernmodell basierend auf dem Vergleichsergebnis;
Abschätzungsmittel (106c) zum Abschätzen der Betrugsgefahr des Zielbenutzers basierend auf der Ausgabe von dem Lernmodell; und
Steuerungsmittel (11c) zum Begrenzen der Nutzung des einen Services (C) durch den Zielbenutzer, wenn das Abschätzungsmittel abschätzt, dass der Zielbenutzer betrügerisch ist.

2. Betrugsabschätzungssystem (S) nach Anspruch 1,
wobei das Lernmodell eine Beziehung zwischen einer Vielzahl von Vergleichsergebnissen, die jeweils einer Vielzahl anderer Services (A, B) entsprechen, und dem Vorhandensein oder Fehlen von Betrug in dem einen Service gelernt hat,
wobei das Vergleichsergebniserhaltungsmittel (104c) konfiguriert ist, um eine Vielzahl von Vergleichsergebnissen zu erhalten, die jeweils der Vielzahl anderer Services (A, B) entsprechen, und
wobei das Ausgabeerhaltungsmittel (105c) konfiguriert ist, um eine Ausgabe von dem Lernmodell basierend auf der Vielzahl von Vergleichsergebnissen zu erhalten.

3. Betrugsabschätzungssystem (S) nach Anspruch 1 oder 2,
wobei das Lernmodell ferner eine Beziehung zwischen einer Nutzungssituation in dem einen Service (C) und dem Vorhandensein oder Fehlen von Betrug in dem einen Service (C) gelernt hat,
wobei das Betrugsabschätzungssystem (S) ferner Nutzungssituationserhaltungsmittel zum Erhalten einer Nutzungssituation des einen Services (C) durch den Zielbenutzer umfasst, und
wobei das Ausgabeerhaltungsmittel (105c) konfiguriert ist, um eine Ausgabe von dem Lernmodell basierend auf der Nutzungssituation durch den Zielbenutzer zu erhalten.

4. Betrugsabschätzungssystem (S) nach Anspruch 3,
wobei in dem einen Service (C) die Betrugsgefahr basierend auf Benutzerinformationen eines vorbestimmten Elements abgeschätzt wird, und
wobei die Nutzungssituation eine Nutzungssituation bezüglich des vorbestimmten Elements ist.

5. Betrugsabschätzungssystem (S) nach einem der Ansprüche 1 bis 4,
wobei in dem einen Service (C) und dem anderen Service (A, B) jeweils eine Vielzahl von Benutzerinformationselementen registriert sind,
wobei das Lernmodell Beziehungen zwischen einer Vielzahl von Vergleichsergebnissen, die jeweils der Vielzahl von Elementen entsprechen, und dem Vorhandensein oder Fehlen von Betrug in dem einen Service (C) gelernt hat,
wobei das Vergleichsergebniserhaltungsmittel (104c) konfiguriert ist, um eine Vielzahl von Vergleichsergebnissen zu erhalten, die jeweils der Vielzahl von Elementen entsprechen, und
wobei das Ausgabeerhaltungsmittel (105c) konfiguriert ist, um eine Ausgabe von dem Lernmodell basierend auf der Vielzahl von Vergleichsergebnissen zu erhalten.

6. Betrugsabschätzungssystem (S) nach einem der Ansprüche 1 bis 5,
wobei in dem anderen Service (A, B) die Betrugsgefahr basierend auf Benutzerinformationen eines vorbestimmten Elements abgeschätzt wird,
wobei das Lernmodell eine Beziehung zwischen einem Vergleichsergebnis von Benutzerinformationen des vorbestimmten Elements und dem Vorhandensein oder Fehlen von Betrug in dem einen Service (C) gelernt hat, und
wobei das Vergleichsergebniserhaltungsmittel (104c) konfiguriert ist, um ein Vergleichsergebnis des vorbestimmten Elements zu erhalten.

7. Betrugsabschätzungssystem (S) nach einem der Ansprüche 1 bis 6,
wobei in dem anderen Service (A, B) die Betrugsgefahr basierend auf Benutzerinformationen eines ersten Elements abgeschätzt wird,
wobei das Lernmodell eine Beziehung zwischen einem Vergleichsergebnis von Benutzerinformationen eines zweiten Elements und dem Vorhandensein oder Fehlen von Betrug in dem einen Service (C) gelernt hat und
wobei das Vergleichsergebniserhaltungsmittel (104c) konfiguriert ist, um ein Vergleichsergebnis des zweiten Elements zu erhalten.

8. Betrugsabschätzungssystem (S) nach einem der Ansprüche 1 bis 7,
wobei in dem anderen Service (A, B) Benutzerinformationen des Zielbenutzers in dem einen Service (C) und Benutzerinformationen eines betrügerischen Benutzers oder eines authentischen Benutzers in dem anderen Service (A, B) verglichen werden und
wobei das Vergleichsergebniserhaltungsmittel (104c) konfiguriert ist, um ein Ergebnis des Vergleichs von dem anderen Service (A, B) zu erhalten.

9. Betrugsabschätzungssystem (S) nach einem der Ansprüche 1 bis 8, ferner umfassend Empfangsmittel (102c) zum Empfangen einer Nutzungsanfrage, die eine Anfrage zur Nutzung des einen Services C) durch den Zielbenutzer ist,
wobei das Abschätzungsmittel (106c) konfiguriert ist, um die Betrugsgefahr des Zielbenutzers abzuschätzen, wenn der eine Service (C) von dem Zielbenutzer genutzt wird.

10. Computerimplementiertes Betrugsabschätzungsverfahren, umfassend:
einen Vergleichsergebniserhaltungsschritt (S14) zum Erhalten eines Vergleichsergebnisses, das ein Ergebnis des Vergleichens von Benutzerinformationen eines Zielbenutzers in einem Service (C) und Benutzerinformationen eines betrügerischen Benutzers oder eines authentischen Benutzers in einem anderen Service (A, B) ist;
einen Ausgabeerhaltungsschritt (S15) zum Erhalten einer Ausgabe von einem Lernmodell basierend auf dem Vergleichsergebnis, wobei das Lernmodell eine Beziehung zwischen einem Vergleichsergebnis, das ein Ergebnis des Vergleichens von Benutzerinformationen eines Benutzers in dem einen Service (C) mit Benutzerinformationen eines betrügerischen Benutzers oder eines authentischen Benutzers in dem anderen Service (A, B) ist, und dem Vorhandensein oder Fehlen von Betrug in dem einen Service (C) gelernt hat;
einen Abschätzungsschritt (S16) zum Abschätzen der Betrugsgefahr des Zielbenutzers basierend auf einer Ausgabe von dem Lernmodell; und
einen Steuerungsschritt (S6) zum Begrenzen der Nutzung des einen Services (C) durch den Zielbenutzer, wenn der Abschätzungsschritt abschätzt, dass der Zielbenutzer betrügerisch ist.

11. Programm zum Veranlassen eines Computers (1c), zu funktionieren als:
Vergleichsergebniserhaltungsmittel (104c) zum Erhalten eines Vergleichsergebnisses, das ein Ergebnis des Vergleichens von Benutzerinformationen eines Zielbenutzers in einem Service (C) und Benutzerinformationen eines betrügerischen Benutzers oder eines authentischen Benutzers in einem anderen Service (A, B) ist;
Ausgabeerhaltungsmittel (105c) zum Erhalten einer Ausgabe von einem Lernmodell basierend auf dem Vergleichsergebnis, wobei das Lernmodell eine Beziehung zwischen einem Vergleichsergebnis, das ein Ergebnis des Vergleichens von Benutzerinformationen eines Benutzers in dem einen Service (C) mit Benutzerinformationen eines betrügerischen Benutzers oder eines authentischen Benutzers in dem anderen Service (A, B) ist, und dem Vorhandensein oder Fehlen von Betrug in dem einen Service (C) gelernt hat;
Abschätzungsmittel (106c) zum Abschätzen der Betrugsgefahr des Zielbenutzers basierend auf einer Ausgabe von dem Lernmodell; und
Steuerungsmittel (11c) zum Begrenzen der Nutzung des einen Services durch den Zielbenutzer, wenn das Abschätzungsmittel abschätzt, dass der Zielbenutzer betrügerisch ist.

## Revendications

1. Système d'estimation de fraude (S), comprenant :
un moyen de stockage (100c) pour stocker un modèle d'apprentissage qui a appris une relation entre un résultat de comparaison qui est un résultat d'une comparaison entre des informations utilisateur d'un utilisateur dans un service (C) et des informations utilisateur d'un utilisateur frauduleux ou d'un utilisateur authentique dans un autre service (A, B) et la présence ou l'absence de fraude dans le service (C) ;
un moyen d'obtention de résultat de comparaison (104c) pour obtenir un résultat de comparaison qui est un résultat d'une comparaison entre des informations utilisateur d'un utilisateur cible dans le service (C) et des informations utilisateur d'un utilisateur frauduleux ou d'un utilisateur authentique dans l'autre service (A, B) ;
un moyen d'obtention de sortie (105c) pour obtenir une sortie du modèle d'apprentissage sur la base du résultat de comparaison ;
un moyen d'estimation (106c) pour estimer un caractère frauduleux de l'utilisateur cible sur la base de la sortie provenant du modèle d'apprentissage ; et
un moyen de commande (11c) pour, lorsque le moyen d'estimation estime que l'utilisateur cible est frauduleux, limiter l'utilisation du service (C) par l'utilisateur cible.

2. Système d'estimation de fraude (S) selon la revendication 1,
dans lequel le modèle d'apprentissage a appris une relation entre une pluralité de résultats de comparaison correspondant respectivement à une pluralité d'autres services (A, B) et la présence ou l'absence de fraude dans le service,
dans lequel le moyen d'obtention de résultat de comparaison (104c) est configuré pour obtenir une pluralité de résultats de comparaison correspondant respectivement à à la pluralité d'autres services (A, B), et
dans lequel le moyen d'obtention de sortie (105c) est configuré pour obtenir une sortie du modèle d'apprentissage sur la base de la pluralité de résultats de comparaison.

3. Système d'estimation de fraude (S) selon la revendication 1 ou 2,
dans lequel le modèle d'apprentissage a en outre appris une relation entre une situation d'utilisation dans le service (C) et la présence ou l'absence de fraude dans le service (C),
dans lequel le système d'estimation de fraude (S) comprend en outre un moyen d'obtention de situation d'utilisation pour obtenir une situation d'utilisation du service (C) par l'utilisateur cible, et
dans lequel le moyen d'obtention de sortie (105c) est configuré pour obtenir une sortie du modèle d'apprentissage sur la base de la situation d'utilisation par l'utilisateur cible.

4. Système d'estimation de fraude (S) selon la revendication 3,
dans lequel, dans le service (C), un caractère frauduleux est estimé sur la base d'informations utilisateur d'un élément prédéterminé, et
dans lequel la situation d'utilisation est une situation d'utilisation concernant l'élément prédéterminé.

5. Système d'estimation de fraude (S) selon l'une quelconque des revendications 1 à 4,
dans lequel, dans chacun du service (C) et de l'autre service (A, B), une pluralité d'éléments d'informations utilisateur sont enregistrés,
dans lequel le modèle d'apprentissage a appris des relations entre une pluralité de résultats de comparaison correspondant respectivement à la pluralité d'éléments et la présence ou l'absence de fraude dans le service (C),
dans lequel le moyen d'obtention de résultat de comparaison (104c) est configuré pour obtenir une pluralité de résultats de comparaison correspondant respectivement à la pluralité d'éléments, et
dans lequel le moyen d'obtention de sortie (105c) est configuré pour obtenir une sortie du modèle d'apprentissage sur la base de la pluralité de résultats de comparaison.

6. Système d'estimation de fraude (S) selon l'une quelconque des revendications 1 à 5,
dans lequel, dans l'autre service (A, B), un caractère frauduleux est estimé sur la base d'informations utilisateur d'un élément prédéterminé,
dans lequel le modèle d'apprentissage a appris une relation entre un résultat de comparaison d'informations utilisateur de l'élément prédéterminé et la présence ou l'absence de fraude dans le service (C), et
dans lequel le moyen d'obtention de résultat de comparaison (104c) est configuré pour obtenir un résultat de comparaison de l'élément prédéterminé.

7. Système d'estimation de fraude (S) selon l'une quelconque des revendications 1 à 6,
dans lequel, dans l'autre service (A, B), un caractère frauduleux est estimé sur la base d'informations utilisateur d'un premier élément,
dans lequel le modèle d'apprentissage a appris une relation entre un résultat de comparaison d'informations utilisateur d'un second élément et la présence ou l'absence de fraude dans le service (C), et
dans lequel le moyen d'obtention de résultat de comparaison (104c) est configuré pour obtenir un résultat de comparaison du second élément.

8. Système d'estimation de fraude (S) selon l'une quelconque des revendications 1 à 7,
dans lequel, dans l'autre service (A, B), des informations utilisateur de l'utilisateur cible dans le service (C) et des informations utilisateur d'un utilisateur frauduleux ou d'un utilisateur authentique dans l'autre service (A, B) sont comparées, et
dans lequel le moyen d'obtention de résultat de comparaison (104c) est configuré pour obtenir un résultat de la comparaison auprès de l'autre service (A, B).

9. Système d'estimation de fraude (S) selon l'une quelconque des revendications 1 à 8, comprenant en outre un moyen de réception (102c) pour recevoir une demande d'utilisation qui est une demande d'utilisation du service (C) par l'utilisateur cible,
dans lequel le moyen d'estimation (106c) est configuré pour estimer un caractère frauduleux de l'utilisateur cible lorsque le service (C) est utilisé par l'utilisateur cible.

10. Procédé d'estimation de fraude mis en œuvre par ordinateur, comprenant :
une étape d'obtention de résultat de comparaison (S14) consistant à obtenir un résultat de comparaison qui est un résultat d'une comparaison entre des informations utilisateur d'un utilisateur cible dans le service (C) et des informations utilisateur d'un utilisateur frauduleux ou d'un utilisateur authentique dans l'autre service (A, B) ;
une étape d'obtention de sortie (S15) consistant à obtenir un sortie d'un modèle d'apprentissage sur la base du résultat de comparaison, le modèle d'apprentissage ayant appris une relation entre un résultat de comparaison qui est un résultat d'une comparaison entre des informations utilisateur d'un utilisateur dans le service (C) et des informations utilisateur d'un utilisateur frauduleux ou d'un utilisateur authentique dans l'autre service (A, B) et la présence ou l'absence de fraude dans le service (C) ;
une étape d'estimation (S16) consistant à estimer un caractère frauduleux de l'utilisateur cible sur la base d'une sortie du modèle d'apprentissage ; et
une étape de commande (S6) consistant à, lorsque l'étape d'estimation estime que l'utilisateur cible est frauduleux, limiter l'utilisation du service (C) par l'utilisateur cible.

11. Programme permettant d'amener un ordinateur (1c) à fonctionner en tant que :
moyen d'obtention de résultat de comparaison (104c) pour obtenir un résultat de comparaison qui est un résultat d'une comparaison entre des informations utilisateur d'un utilisateur cible dans le service (C) et des informations utilisateur d'un utilisateur frauduleux ou d'un utilisateur authentique dans l'autre service (A, B) ;
moyen d'obtention de sortie (105c) pour obtenir une sortie d'un modèle d'apprentissage sur la base du résultat de comparaison, le modèle d'apprentissage ayant appris une relation entre un résultat de comparaison qui est un résultat d'une comparaison entre des informations utilisateur d'un utilisateur dans le service (C) et des informations utilisateur d'un utilisateur frauduleux ou d'un utilisateur authentique dans l'autre service (A, B) et la présence ou l'absence de fraude dans le service (C) ;
moyen d'estimation (106c) pour estimer un caractère frauduleux de l'utilisateur cible sur la base d'une sortie provenant du modèle d'apprentissage ; et
moyen de commande (11c) pour, lorsque le moyen d'estimation estime que l'utilisateur cible est frauduleux, limiter l'utilisation du service par l'utilisateur cible.
